# EUROPÄISCHE PATENTSCHRIFT

(11) **EP 2 831 862 B1**
(45) Veröffentlichungstag und Bekanntmachung des Hinweises auf die Patenterteilung: **25.08.2021**
(21) Anmeldenummer: 13712806.2
(22) Anmeldetag: 28.03.2013
(51) Int. Cl.: G08G 1/16, A01M 29/18

(54) **WILDWARNSYSTEM**
ANIMAL WARNING SYSTEM
SYSTÈME D'ALERTE POUR ANIMAUX SAUVAGES

(30) Priorität: 29.03.2012 EP 12162308
(43) Veröffentlichungstag der Anmeldung: 04.02.2015
(73) Patentinhaber: IPTE - Schalk & Schalk OG, 8054 Graz (AT)
(72) Erfinder: SCHALK, Andreas, A-8054 Graz (AT); SCHALK, Rainer, A-8141 Unterprämstetten (AT)
(74) Vertreter: Reitstötter Kinzebach
(86) Internationale Anmeldenummer: PCT/EP2013/056753
(87) Internationale Veröffentlichungsnummer: WO 2013/144312

(56) Entgegenhaltungen:
- DE-A1-102004 035 856
- DE-A1-102011 102 759
- DE-C1- 4 140 662
- US-A1- 2002 145 519
- US-A1- 2003 071 735
- US-B1- 6 816 086

## Beschreibung

Die vorliegende Erfindung betrifft ein Wildwarnsystem, insbesondere ein Wildwarnsystem zur Vermeidung von Wildunfällen durch Kollisionen von Wildtieren mit Fahrzeugen aller Art, insbesondere Kraftfahrzeugen, aber auch Schienenfahrzeugen oder startenden und landenden Flugzeugen.

Unfälle mit Wildtieren, insbesondere größeren Wildtieren wie Rehen, Hirschen oder Wildschweinen, gehören bedauerlicher Weise zum täglichen Straßenbild und enden nicht nur für die betroffenen Wildtiere meist tödlich, sondern verursachen auch hohen jährlichen Personen- und Sachschaden. Mit immer leiseren Fahrzeugen, die sich auch mit einer tendenziell höheren Geschwindigkeit bewegen, nimmt die Tendenz zu schwerwiegenden Wildunfällen in den letzten Jahren eher zu, da den Tieren beim Herannahen eines Fahrzeugs nicht mehr ausreichend Zeit zur Flucht bleibt. Wildunfälle stellen aber nicht nur für den Straßenverkehr ein großes Problem dar, sondern sind auch für den Zugverkehr, insbesondere für Hochgeschwindigkeitspersonenzüge, sowie für startende und landende Flugzeuge eine große Gefahrenquelle.

Insbesondere für den Straßenverkehr wurden in den vergangenen Jahrzehnten unterschiedlichste Ansätze zur Vermeidung von Wildunfällen entwickelt. Neben kostenträchtigen baulichen Maßnahmen, wie dem Anlegen von Wildbrücken, Wildtunneln oder Wildzäunen, sind auch verschiedenste Wildwarneinrichtungen bekannt die üblicherweise an gefährdeten Straßenabschnitten am Straßenrand montiert werden und durch Aussenden von akustischen und/oder optischen Signalen Kollisionen von Wildtieren mit Fahrzeugen verhindern sollen. Eine Variante derartiger Wildwarneinrichtungen basiert auf der Detektion der Wildtiere selbst. Beispielsweise sind Wildwarneinrichtungen bekannt, die mit Lichtschranken, die entlang der Fahrbahnränder verlaufen, arbeiten, wobei nach Unterbrechung der Lichtschranke durch ein Wildtier akustische und optische Warnsignale ausgesandt werden, um das Wildtier am Überqueren der Straße zu hindern. Andere Wildwarneinrichtungen basieren auf der Detektion von herannahenden Fahrzeugen. Derartige Vorrichtungen sind als passive und aktive Varianten bekannt. Bei den passiven Varianten wird lediglich das Scheinwerferlicht von herannahenden Fahrzeugen durch geeignete Reflektoren seitlich abgelenkt, so dass durch die optische Wirkung das Wild am Überqueren der Fahrbahn gehindert und somit Unfälle vermieden werden sollen. Die Wirksamkeit derartiger passiver Reflektoren erweist sich aber als sehr eingeschränkt. Wesentlich wirksamer sind aktive elektronische Wildwarneinrichtungen, die eine eigene elektrische Spannungsversorgung besitzen und beispielsweise mittels eines Lichtsensors ein herannahendes Fahrzeug detektieren und in der Folge aktiv akustische und/oder optische Warnsignale aussenden können. Ein typisches Beispiel einer derartigen Wildwarneinrichtung, die eine elektrische Spannungsversorgung, wenigstens einen Signalgeber zum Aussenden akustischer und/oder optischer Signale und einen Mikrocontroller zur Steuerung des Signalgebers aufweist ist das unter der Bezeichnung WWG2.1 vertriebene Wildschutzgerät der Anmelderin, das eines der effektivsten kommerziell erhältlichen Geräte darstellt.

In der Patentschrift US 2003071735 A1 wird ein Wildschutzsystem (Wildlife warning system) beschrieben, das über ein Funksignal aktiviert werden kann, beziehungsweise das bei Aktivierung über einen Sensor ein Aktivierungssignal an benachbarte Wildwarner übermittelt.

In DE 10 2011 102 759 A1 wird ein System zur Beeinflussung von Wildtieren beschrieben, das mehrere miteinander kommunizierende Warneinrichtungen umfasst.

DE 102004035856A1 betrifft eine elektrische Zusatzeinrichtung zur Anbringung an einem Halterohr einer Verkehrseinrichtung, welche elektronische Mittel mit zumindest einer Sensoreinrichtung zur Erfassung von Straßenverkehrsdaten aufweist.

Jedoch sind auch die bisher bekannten elektronischen Wildwarneinrichtungen mit Problemen verbunden.

Geräte, die auf der Detektion des Scheinwerferlichts von herannahenden Fahrzeugen beruhen, haben zum Beispiel einer relativ kurzen Vorwarnzeit für die Wildtiere, wenn sich die Fahrzeuge mit höherer Geschwindigkeit nähern. Schon aber Fahrzeuggeschwindigkeiten von etwa 50 km/h und mehr bleibt den Wildtieren oft nicht mehr genug Zeit, um bis zum Eintreffen des Fahrzeugs die Fahrbahn verlassen zu können.

Außerdem sind derartige Geräte bei Tageslicht nicht wirksam, da die Auslösung der Signalgeber bei Detektion von Scheinwerferlicht erfolgt, so dass die Geräte üblicherweise durch einen Umgebungslichtsensor erst bei Dämmerung bzw. bei Einbruch der Nacht aktiviert werden.

Bei Wildwarneinrichtungen, die, unabhängig vom Fahrzeugaufkommen, bei Detektion der Wildtiere selbst aktiviert werden besteht zudem die Gefahr von Gewöhnungseffekten, da das Auslösen der Licht- und Tonsignale dann nicht mit einer konkreten Gefahrensituation assoziiert wird. Daher kann die Wirksamkeit derartiger Anlagen längerfristig beeinträchtigt werden.

Elektronische Wildwarngeräte sind generell auch diebstahlgefährdet und auf Grund der begrenzten Lebensdauer der Komponenten wartungsaufwändig. Es sind daher häufige zeit- und kostenträchtige Kontrollen erforderlich, um eine durchgängige Funktion und Verfügbarkeit der Wildwarneinrichtungen sicherzustellen.

Der vorliegenden Erfindung liegt daher das technische Problem zu Grunde, ein Wildwarnsystem bereitzustellen, das die oben beschriebenen Probleme bekannter Wildwarneinrichtungen löst oder zumindest minimiert.

Diese Aufgabe ist erfindungsgemäß mit dem Wildwarnsystem nach Anspruch 1 gelöst.

Das erfindungsgemäß vorgesehene drahtlose Netzwerk von miteinander und/oder mit einer Basisstation kommunizierenden Wildwarneinrichtungen deckt einen abzusichernden Bereich einer Straße, eines Eisenbahngleisabschnitts oder einer Start- und Landebahn eines Flughafens ab. Die Anzahl der in dem drahtlosen Netzwerk verbundenen unabhängigen Wildwarneinrichtungen hängt dabei von der Größe des abzusichernden Bereichs und der Reichweite der Signalgeber ab.

Mit dem erfindungsgemäßen Wildwarnsystem sind zahlreiche Vorteile verbunden: So können durch Kommunikation der Wildwarneinrichtungen untereinander Informationen über ankommende Fahrzeuge ausgetauscht werden. Wenn beispielsweise ein in einen überwachten Streckenabschnitt eintretendes Fahrzeug detektiert wird, kann nicht nur der Signalgeber der ersten Warneinrichtung ausgelöst werden, sondern durch Übertragung der Information mittels der Kommunikationsmittel auf darauffolgende Warneinrichtungen können auch deren Signalgeber ausgelöst werden, so dass sich die Vorwarnzeit entsprechend erhöht und Wildtiere auch beim Herannahen von schnellen Fahrzeugen ausreichend Zeit haben, die Fahrbahn oder das Gleisbett zu verlassen.

Ferner kann die Zuverlässigkeit des Netzwerks von Wildwarneinrichtungen erhöht werden. Beispielsweise können die Warneinrichtungen über ihre eingebauten Kommunikationsmittel nicht nur Informationen über ankommende Fahrzeuge, sondern auch Statusinformationen übermitteln. Registriert beispielsweise eine Warneinrichtung eine Fehlfunktion bei einer benachbarten Warneinrichtung kann sie beispielsweise die Amplitude ihres Signalgebers erhöhen, um die Abschreckwirkung der defekten Warneinrichtung auf Wildtiere zumindest teilweise zu kompensieren. Ferner können derartige netzwerkrelevante Informationen bei Wartungsarbeiten einfach an einer einzelnen Warneinrichtung drahtlos ausgelesen werden, um beispielsweise in einem größeren Netzwerk einzelne defekte Warneinrichtungen schneller identifizieren zu können. Derartige netzwerkrelevante Informationen können aber auch zu einer Basisstation des Netzwerkes übermittelt werden, die derartige Informationen drahtgebunden oder drahtlos u einer weit entfernten Zentrale übermittelt, von wo aus entsprechende Wartungsarbeiten veranlasst werden können.

Die miteinander drahtlos vernetzten Warneinrichtungen können außerdem zu einer untereinander koordinierten Auslösung von Warneffekten konfiguriert sein. Beispielsweise können die Signalgeber der Warneinrichtungen für ein synchrones Auslösen oder für ein entlang der überwachten Strecke wellenförmiges Auslösen konfiguriert sein. Die Warneffekte können auch variiert werden um beispielsweise einen Gewöhnungseffekt der Wildtiere an die akustischen oder optischen Signale zu verhindern.

Schließlich eignet sich das vernetzte Netzwerk aus Warneinrichtungen auch dazu, die einzelnen Warneinrichtungen des Netzwerks zentral zu konfigurieren oder mit Softwareupdates zu versorgen. Falls eine Basisstation Teil des Netzwerks ist, können die entsprechenden Daten von einer entfernten Servicezentrale aus über die Basisstation an die einzelnen Warneinrichtungen des Netzwerks übertragen werden. Es ist jedoch auch möglich, im Rahmen von Wartungsarbeiten vor Ort eine einzelne Warneinrichtung entsprechend zu konfigurieren, wobei anschließend die Daten über die Kommunikationsmittel der Warneinrichtung an die anderen Warneinrichtungen des Netzwerks übertragen werden.

Das drahtlose Netzwerk des erfindungsgemäßen Wildwarnsystems umfasst wenigstens eine Detektionseinrichtung zur Erfassung herannahender Fahrzeuge. Eine derartige Detektionseinrichtung ist vorzugsweise an der Grenze des zu überwachenden Bereichs, beispielsweise eines Straßenabschnitts angeordnet. Die Detektionseinrichtung kann beispielsweise einen an sich bekannten Lichtsensor umfassen, der auf die Scheinwerfer eines herannahenden Fahrzeugs reagiert. Um jedoch eine ganztägige Überwachung zu ermöglichen handelt es sich vorzugsweise um einen Sensor, der Fahrzeuge unabhängig von der Tageszeit, also insbesondere unabhängig von eingeschalteten Scheinwerfern detektieren kann. Beispielsweise können in eine Straße eingelassene oder an einer Straße angeordnete kapazitive oder induktive Sensoren zur Fahrzeugdetektion verwendet werden. Ferner können optische Sensoren, beispielsweise Lichtschranken, Ultraschalldetektoren, akustische Detektoren oder Radargeräte verwendet werden. Vorzugsweise wird auch die Fahrzeuggeschwindigkeit ausgewertet, um die Auslösung der Signalgeber der einzelnen Warneinrichtungen zu optimieren. Als Detektionseinrichtung kann aber auch ein Empfänger verwendet werden, der ein von dem herannahenden Fahrzeug aktiv ausgestrahltes Signal empfängt und die Warneinrichtungen des Netzwerks entsprechend aktiviert. Ein solches System erweist sich insbesondere bei der Sicherung von Start- und Ladebahnen von unbenannten Kleinflughäfen als nützlich. Ein herannahendes, zur Ladung ansetzendes Flugzeug kann dann die entlang der Landebahn angebrachten Warneinrichtungen durch ein Funksignal selbst auslösen und so eventuell im Landebereich befindliche Wildtiere rechtzeitig vertreiben. Derartige aktiv von herannahenden Fahrzeugen ausgestrahlte Informationen können beispielsweise auch so genannte ETSI G5 CAM-Nachrichten umfassen, die auf 5,9 Gigahertz Positions- und Vektor-Informationen (also Position, Fahrtrichtung und Geschwindigkeit) des Fahrzeugs übertragen. Derartige Informationen können von der Detektionseinrichtung unmittelbar beim Eintritt in den überwachten Bereich empfangen werden oder aber vom Fahrzeug oder über Zwischenschaltung von Verkehrsleitzentralen an die Basisstation eines Netzwerks übertragen werden, so dass Informationen über herannahende Fahrzeuge bereits vorliegen können, bevor diese von einer Detektionseinrichtung erfasst werden.

Die Detektionseinrichtung kann ein unabhängiges Bauteil sein und ist in diesem Fall ebenfalls mit Kommunikationsmitteln zur Einbindung in das drahtlose Netzwerk ausgerüstet. Vorzugsweise ist aber wenigstens eine der Warneinrichtungen des Netzwerks mit der Detektionseinrichtung versehen. Besonders bevorzugt sind alle Warneinrichtungen des Netzwerkes identisch aufgebaut und weisen jeweils eine Detektionseinrichtung auf. Damit ist ein Höchstmaß an Redundanz gewährleistet, so dass der Ausfall einzelner Warneinrichtungen sofort kompensiert werden kann. Außerdem können nachfolgende Warneinrichtungen dynamisch an eventuelle Änderungen der Fahrzeuggeschwindigkeit oder ein Anhalten/Abbiegen des Fahrzeugs angepasst werden.

Die Kommunikationsmittel der Warneinrichtungen bzw. der Basisstation mit den Warneinrichtungen nutzen erfindungsgemäß die Funkdatenübertragung.

Vorzugsweise wird ein protokollbasierende Funkkommunikation eingesetzt, die besonders bevorzugt einen Austausch von netzwerkrelevanten Informationen, wie Events (erkannte Fahrzeuge, Fehlfunktionen im Sensornetzwerk, Diebstahlversuch) und Statusinformation der einzelnen Wildwarner umfasst. Durch die Fahrzeugerkennung in jedem Wildwarner und die Weitergabe der Information innerhalb des Netzwerks ist es möglich, zusätzliche Informationen wie Richtung und Geschwindigkeit der Fahrzeuge zu ermitteln. Damit kann die Auslösesequenz auf jedes einzelne Fahrzeug abgestimmt und somit die Warnwirkung verbessert werden. Als Kommunikationsprotokoll kann beispielsweise 6LoWPAN (IPv6 over Low Power Wireless Personal Area Network) eingesetzt werden.

Erfindungsgemäß weist jeder Teilnehmer des Netzwerks, also insbesondere die Warneinrichtungen aber auch gegebenenfalls vorgesehene unabhängige Detektionseinrichtungen zur Erfassung von Fahrzeugen eindeutige Netzwerkadressen, beispielsweise IPv6-Adressen zur Identifikation auf. Damit ist es möglich, beispielsweise Konfigurationsdaten innerhalb des drahtlosen Netzwerkes spezifisch zu adressieren oder auch den Ausfall individueller Komponenten zu registrieren. Ferner lassen sich beliebig komplizierte Muster der Signalgeberauslösung in Abhängigkeit von der jeweiligen Gefahrensituation generieren.

Das drahtlose Netzwerk umfasst eine Basisstation (Server/Gateway) zur Anbindung des Netzwerks an eine weiter entfernt befindliche Servicezentrale. Die Basisstation weist daher einerseits Kommunikationsmittel zur drahtlosen Kommunikation mit den Warneinrichtungen des drahtlosen Netzwerkes und Kommunikationsmittel zur Kommunikation mit der Servicezentrale auf. Die Kommunikation mit der Servicezentrale kann dabei drahtgebunden mittels im Boden verlegter Leitungen oder Überlandleitungen oder drahtlos beispielsweise über Mobilfunknetze oder Satellitenfunknetze erfolgen. Die Basisstation (Server/Gateway) dient insbesondere zur Abfrage von Serviceinformationen von den einzelnen Warneinrichtungen, insbesondere über Betriebszustand, Helligkeit, Temperatur, Fahrzeugaufkommen und Ähnlichem und zum Empfang von Warninformationen, beispielsweise über den niedrigen Batteriezustand einzelner Warneinrichtungen, über den Ausfall einzelner Warneinrichtungen oder deren Entfernung aus dem Netzwerk. Andererseits kann die Basisstation von der Servicezentrale Fahrzeuginformationen, beispielsweise die oben erwähnten ETSI G5 CAM-Nachrichten empfangen, die für das Netzwerk der jeweiligen Basisstation relevant sind. Schließlich ermöglicht die Einbindung einer Basisstation in das Netzwerk die Fernkonfiguration bzw. die Fern-Softwareaktualisierung der einzelnen

Die Warneinrichtungen des erfindungsgemäßen Wildwarnsystems sind mit einem Lagesensor, beispielsweise einem bi- oder triaxialen Beschleunigungssensor ausgerüstet. Der Lagesensor kann beispielsweise eine Warnmeldung aussenden lassen, wenn die Warneinrichtung, beispielsweise nach einer Fahrzeugskollision, nicht mehr korrekt ausgerichtet ist, so dass die Funktionsfähigkeit der optischen und akustischen Signalgeber beeinträchtigt sein kann. Ferner dient der Lagesensor auch als Diebstahlsicherung, so dass bei einer Dislokation der Warneinrichtung eine Funkmeldung ausgelöst und/oder die optischen oder akustischen Signalgeber aktiviert werden können. Als Diebstahlschutz dient ferner die eindeutige Kennung der Warneinrichtungen, so dass in Verbindung mit der drahtlosen Abfragemöglichkeit im Vorbeifahren auch als gestohlen gemeldete Warneinrichtungen, die an einem anderen Ort wieder im Einsatz sind, identifiziert werden können. Der Mikrokontroller ist dabei ausgebildet, Signale des Lagesensors auszuwerten und, wenn sich die Warneinrichtung nicht mehr in ihrer ordnungsgemäßen Position befindet, einen Alarm auszulösen und über die Kommunikationsmittel und die Basisstation an die Servicezentrale zu übertragen

Der Lagesensor zur Diebstahlssicherung kann bei einer Dislokation eine Funkmeldung generieren und/oder optischen und/oder akustischen Aktuatoren aktivieren. Außerdem kann eine Funktionseinheit vorgesehen werden, welche erkennt ob sich der Wildwarner in Bewegung befindet, um einen Diebstahl von einem versehentlichen Anstoßen unterscheiden zu können. Ferner kann ein akustischer und/oder optischer Alarmgeber vorgesehen sein, welcher beim Erkennen eines Diebstahlversuchs ausgelöst wird. Bevorzugt ist auch eine drahtlose Abfragemöglichkeit vorgesehen, um gestohlen gemeldete Wildwarner im Vorbeifahren zu erkennen. Gemäß einer Ausführungsform ist eine Funktionseinheit zum Erkennen von Richtung und Geschwindigkeit, mit der ein Wildwarner aus seiner Position entfernt wird, vorgesehen. Durch Kommunikation der von ihrer Position entfernten Wildwarneinrichtung mit anderen Wildwarneinrichtungen, die sich noch an ihrem Platz am Straßenrand befinden, kann sowohl die aktuelle Position, als auch Richtung und Geschwindigkeit der von ihrer Position entfernten Wildwarneinrichtung bestimmt werden.

Als zusätzlicher Diebstahlschutz kann die Warneinrichtung über ein Montageeinrichtung (beispielsweise eine Drahtseil, eine Stange, usw.) mit einem ausklappbaren Bodenanker verbunden sein. Der Bodenanker kann beispielsweise eingeklappt in einer Montageeinrichtung, beispielsweise einer Stange oder einem Leitpflock angeordnet sein und nach Einbringen der Montageeinrichtung in den Boden durch Zug an dem Drahtseil oder durch Drehen der Stange ausgeklappt werden.

Die Spannungsversorgung der Warneinrichtung des erfindungsgemäßen Wildwarnsystems kann Batterien oder Akkumulatoren umfassen, insbesondere einen Lithium-Polymer-Akkumulator. Besonders bevorzugt umfasst die Warneinrichtung außerdem ein Solarmodul zum Aufladen des Akkumulators. Dabei kann es sich beispielsweise um Dünnschicht-Solarzellen handeln, die speziell für schwachen Lichteinfall optimiert sind, so dass ein Aufladen auch unter schlechten Lichtbedingungen, beispielsweise in Waldabschnitten, gewährleistet ist. Typischerweise erreicht man bei Verwendung mit kombinierten optischen und akustischen Warnsignalen bei einer Straße mit mittlerem Verkehrsaufkommen Betriebszeiten von cirka zwei Monaten ohne dass eine längere Aufladphase erforderlich ist. Bereits ein einzelner Sonnentag lädt den Akkumulator dann wieder für eine Betriebsphase von über einem Monat auf.

Das Solarmodul der Warneinrichtung kann jedoch nicht nur zum Aufladen des Akkumulators sondern auch als Kommunikationsschnittstelle mit dem Mikroprozessor verwendet werden. über entsprechende auf das Solarmodul abgegebene Lichtsignale kann das Wartungspersonal die Warneinrichtung ein- und ausschalten oder auch konfigurieren. Damit kann eine kostengünstige Schnittstelle zum Ein- und Ausschalten, sowie zum Konfigurieren der Wildwarner realisiert werden, die nahezu keinen Eigenstromverbrauch aufweist.

Im Folgenden wird das erfindungsgemäße Wildwarnsystem unter Bezugnahme auf beigefügte Zeichnungen näher erläutert. In den Zeichnungen zeigt:
- Fig. 1: eine schematische Darstellung eines durch mehrere Warneinrichtungen überwachten Straßenabschnitts;
- Fig. 2: eine schematische Darstellung einer einzelnen Warneinrichtung;
- Fig. 3: ein Beispiel einer mit einem Bodenanker gesicherten Warneinrichtung des erfindungsgemäßen Wildwarnsystems;
- Fig. 4: eine Variante der Warneinrichtung der Figur 3; und
- Fig. 5: einen schematischen Querschnitt durch die Wildwarneinrichtung der Fig. 4 auf Höhe der Linie V-V in Fig. 4.

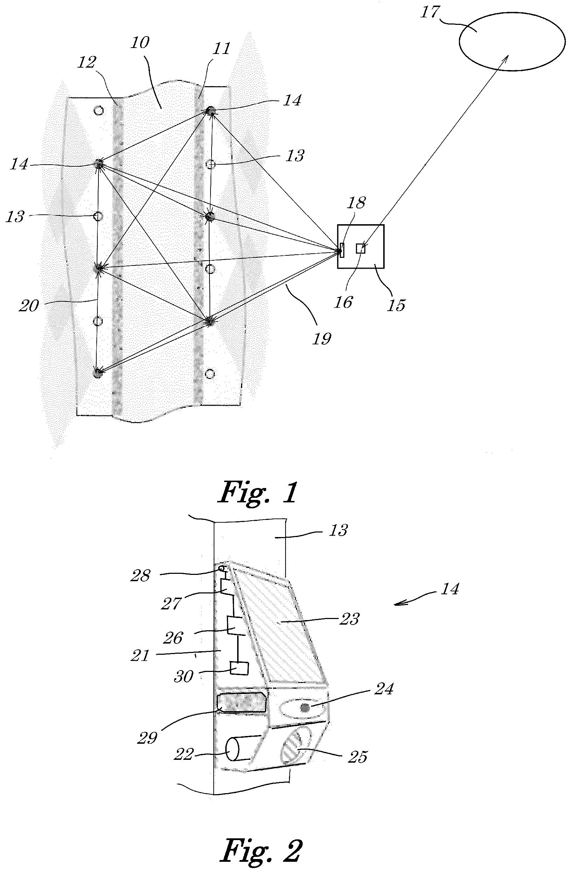

In Fig. 1 ist ein mit dem erfindungsgemäßen Wildwarnsystem überwachter Abschnitt einer Straße 10 dargestellt. An den Seitenrändern 11, 12 der Straße 10 sind, üblicherweise im Abstand von 25 Metern, Leitpfosten 13 montiert. Alle 25 Meter sind die Leitpfosten abwechselnd auf der linken und rechten Straßenseite mit Warneinrichtungen des erfindungsgemäßen Wildwarnsystems ausgerüstet. Bei weniger gefährdeten Straßenabschnitten kann die Bestückung auch beispielsweise alle 50 Meter erfolgen. Die Warneinrichtungen 14 können untereinander und/oder mit einer in der Nähe befindlichen Basisstation 15 drahtlos kommunizieren. Die Basisstation 15 ist beispielsweise mit einem GSM- oder UMTS-Modul 16 ausgerüstet, über das sie mit einer entfernten Servicezentrale 17 kommunizieren kann. Zur drahtlosen Kommunikation mit den Warneinrichtungen 14 des Netzwerks weist die Basisstation 15 ein Funkmodul 18 auf, mit dem über kürzere Entfernungen von einigen hundert Metern bis einige Kilometer kommuniziert werden kann. Das Netzwerk kann auch so konfiguriert sein, dass bei einer geringen Reichweite des Kommunikationsmoduls 18 lediglich mit einer in unmittelbarer Nähe der Basisstation 15 befindlichen Warneinrichtung 14 kommuniziert wird und die Warneinrichtungen 14, die ebenfalls über Kommunikationsmittel zur drahtlosen Kommunikation mit anderen Warneinrichtungen verfügen, entsprechende Daten an die Zielwarneinrichtung weiterleiten, so dass auch längere Straßenabschnitte mit relativ leistungsschwachen und daher energiesparenden Funkkommunikationsmitteln überwacht werden können. Die Funkkommunikation zwischen Basisstation 15 und Warneinrichtungen 14 wird in Fig. 1 durch die Pfeile 19 symbolisiert. Die Funkkommunikation der Warneinrichtungen 14 untereinander wird durch Pfeile 20 symbolisiert.

Fig. 2 zeigt eine Warneinrichtung 14 des erfindungsgemäßen Wildwarnsystems, die beispielsweise an einem Straßenleitpfosten 13 montiert werden kann. Die Warneinrichtung 14 weist ein wetterdichtes Gehäuse 21 auf, in welcher die lediglich symbolisch angedeutete Spannungsversorgung 22, beispielsweise ein Lithium-Polymer-Akku, die von einem Solarmodul 23 gespeist wird, eine als optischer Signalgeber dienende lichtemittierende Diode 24, ein als optischer Signalgeber dienender Lautsprecher 25 und ein Mikrocontroller 26 zur Steuerung der beiden Signalgeber angeordnet ist. Der Mikrocontroller 26 kann außerdem den Ladeschutz der Spannungsversorgung 22 gewährleisten. In dem Gehäuse 21 sind außerdem Kommunikationsmittel 27, die eine Antenne 28 umfassen zur Kommunikation mit anderen Warneinrichtungen oder der Basisstation 15 angeordnet. Außerdem weist die Warneinrichtung 14 einen Scheinwerfersensor 29 zur Detektion von herannahenden Fahrzeugen auf. Die Kommunikationsmittel 27 werden ebenfalls von dem Mikrocontroller 26 gesteuert. Schließlich ist in dem Gehäuse 21 ein Lagesensor 40 angeordnet, dessen Signale ebenfalls von dem Mikrocontroller 26 ausgewertet werden, so dass beispielsweise bei einem Unfall, wenn sich die Warneinrichtung 14 nicht mehr in ihrer ordnungsgemäßen Position befindet oder bei einem Diebstahl der Warnanlage ein entsprechender Alarm ausgelöst und über die Kommunikationsmittel 27 und die Basisstation 15 an die Servicezentrale 17 übertragen werden kann.

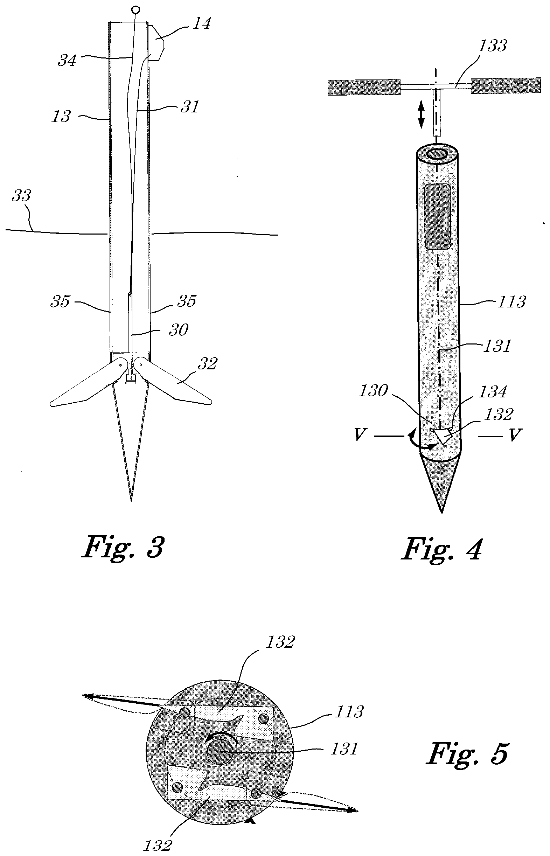

Herkömmliche Leitpfosten können leicht aus dem Boden herausgerissen werden, so dass auch ein Leitpfosten mit Warneinrichtung einfach gestohlen werden kann. Zur Verbesserung des Diebstahlschutzes kann daher der Leitpfosten 13 oder auch eine separate Montagestange, an welcher die Warneinrichtung 14 montiert sein kann, mit einem mechanischen Diebstahlschutz versehen sein. Eine bevorzugte Ausführungsform eines solchen Diebstahlschutzes ist in Fig. 3 dargestellt, wobei der Leitpfosten 13 mit einem Bodenanker 30 versehen ist, der über ein Drahtseil 31 mit der Warneinrichtung 14 verbunden ist. Der Bodenanker 30 weist zwei oder mehrere ausklappbare Arme 32 auf, die nach Einsetzen des Pfostens 13 in den Boden 33 über den Sicherungsdraht 30 oder ein separates Zugseil 34 durch in der Außenwandung des Pfostens 13 vorgesehene Öffnungen 34 ausgeklappt werden können, so dass der Pfosten mit der Warneinrichtung sicher im Boden verankert werden kann.

Figur 4 zeigt eine Variante der Warneinrichtung der Figur 3. Dabei weist der Leitpfosten 113 wiederum einen Bodenanker 130 auf, der im dargestellten Beispiel über eine Stange 131 bedienbar ist. Durch Drehen der Stange 131 werden ein oder mehrere (im dargestellten Beispiel zwei) Arme 132 ausgeklappt. Nach Einsetzen des Pfostens 113 in den Boden wird die Stange 131 mittels eines in den Posten 113 einsetzbaren Drehgriffs gedreht, so dass die Arme durch in der Außenwandung des Pfostens 113 vorgesehene Öffnungen 134 ausgeklappt werden können (vergl. Figur 5, die einen schematischen Querschnitt durch die Wildwarneinrichtung auf Höhe der Linie V-V in Figur 4 zeigt).

## Patentansprüche

1. Wildwarnsystem, welches wenigstens zwei unabhängige Warneinrichtungen (14) umfasst, wobei jede Warneinrichtung (14) eine elektrische Spannungsversorgung (22), wenigstens einen Signalgeber (24, 25) und einen Mikrokontroller (26) zur Steuerung des Signalgebers (24, 25) aufweist, **dadurch gekennzeichnet, dass** jede Warneinrichtung außerdem einen Lagesensor (40) und ein Kommunikationsmittel (27, 28) zur drahtlosen Kommunikation mit anderen Warneinrichtungen (14) und/oder mit einer Basisstation (15) zur Bildung eines drahtlosen Funknetzwerks von Wildwarneinrichtungen umfasst, wobei das drahtlose Funknetzwerk eine Basisstation (15) zur Anbindung des drahtlosen Funknetzwerks an eine Servicezentrale (17) umfasst und die Basisstation (15) über ein Telefon- oder Mobilfunknetz mit der Servicezentrale kommuniziert, und wobei das drahtlose Funknetzwerk wenigstens eine Detektionseinrichtung (29) zur Erfassung herannahender Fahrzeuge umfasst und jeder Warneinrichtung (14) eine eindeutige Netzwerkidentifikation zugeordnet ist,
wobei der Mikrokontroller (26) ausgebildet ist, Signale des Lagesensors (40) auszuwerten und, wenn sich die Warneinrichtung (14) nicht mehr in ihrer ordnungsgemäßen Position befindet, einen Alarm auszulösen und über die Kommunikationsmittel (27,28) und die Basisstation (15) an die Servicezentrale (17) zu übertragen.

2. Wildwarnsystem gemäß Anspruch 1, **dadurch gekennzeichnet, dass** die Detektionseinrichtung (29) in die Warneinrichtung (14) integriert ist.

3. Wildwarnsystem gemäß einem der Ansprüche 1 bis 2, **dadurch gekennzeichnet, dass** die Warneinrichtung einen mechanischen Diebstahlschutz umfasst.

4. Wildwarnsystem gemäß Anspruch 3, **dadurch gekennzeichnet, dass** der mechanische Diebstahlschutz einen ausklappbaren Bodenanker (30) umfasst.

5. Wildwarnsystem gemäß einem der Ansprüche 1 bis 4, **dadurch gekennzeichnet, dass** die elektrische Spannungsversorgung (22) der Warneinrichtung (14) eine Batterie oder einen Akkumulator, insbesondere einen Lithium-Polymer-Akkumulator umfasst.

6. Wildwarnsystem gemäß Anspruch 5, **dadurch gekennzeichnet, dass** die Warneinrichtung (14) ein Solarmodul (23) zum Aufladen des Akkumulators umfasst.

7. Wildwarnsystem gemäß Anspruch 6, **dadurch gekennzeichnet, dass** die Warneinrichtung (14) über das Solarmodul (23) konfigurierbar ist.

## Claims

1. A wildlife warning system that comprises at least two independent warning devices (14), wherein each warning device (14) has an electric power supply (22), at least one signal generator (24,25) and a microcontroller (26) for controlling the signal generator (24,25), **characterized in that** each warning device furthermore comprises a position sensor (40) and a communication means (27,28) for wireless communication with other warning devices (14) and/or with a base station (15) for the purpose of forming a wireless radio network of wildlife warning devices, wherein the wireless radio network comprises a base station (15) for linking the wireless radio network to a server control center (17) and the base station (15) uses a telephone or mobile radio network to communicate with the service control center, and wherein the wireless network comprises at least one detection device (29) for sensing approaching vehicles and each warning device (14) has an associated explicit network identification, wherein the microcontroller (26) is configured to evaluate signals from the position sensor (40) and, when the warning device (14) is no longer in its proper position, to trigger an alarm and transmit the same via the communication means (27) and the base station (15)to the service control center (17).

2. The wildlife warning system as claimed in claim 2, **characterized in that** the detection device (29) is integrated in the warning device (14).

3. The wildlife warning system as claimed in one of claims 1 to 2, **characterized in that** the warning device comprises a mechanical theft prevention system.

4. The wildlife warning system as claimed in claim 3, **characterized in that** the mechanical theft prevention system comprises a foldout ground anchor (30).

5. The wildlife warning system as claimed in one of claims 1 to 4, **characterized in that** the electric power supply (22) of the warning device (14) comprises a battery or a storage battery, particularly a lithium polymer storage battery.

6. The wildlife warning system as claimed in claim 5, **characterized in that** the warning device (14) comprises a solar module (23) for charging the storage battery.

7. The wildlife warning system as claimed in claim 6, **characterized in that** the warning device (14) can be configured using the solar module (23).

## Revendications

1. Système d'alerte pour animaux sauvages, qui comprend au moins deux dispositifs d'alerte (14) indépendants, dans lequel chaque dispositif d'alerte (14) présente une alimentation électrique (22), au moins un émetteur de signaux (24, 25) et un microcontrôleur (26) permettant de commander l'émetteur de signaux (24, 25), **caractérisé en ce que** chaque dispositif d'alerte comprend en outre un capteur de position (40) et un moyen de communication (27, 28) permettant la communication sans fil avec d'autres dispositifs d'alerte (14) et/ou avec une station de base (15) pour former un réseau radio sans fil de dispositifs d'alerte pour animaux sauvages, où le réseau radio sans fil comprend une station de base (15) permettant de connecter le réseau radio sans fil à une centrale de service (17) et où la station de base (15) communique avec la centrale de service par le biais d'un réseau téléphonique ou de téléphonie mobile, et où le réseau radio sans fil comprend au moins un dispositif de détection (29) permettant de détecter des véhicules qui s'approchent et une identification de réseau univoque est affectée à chaque dispositif d'alerte (14), où le microcontrôleur (26) est réalisé pour évaluer des signaux du capteur de position (40) et, lorsque le dispositif d'alerte (14) ne se trouve plus dans sa position correcte, pour déclencher une alarme et la transmettre à la centrale de service (17) par le biais des moyens de communication (27, 28) et de la station de base (15).

2. Système d'alerte pour animaux sauvages selon la revendication 1, **caractérisé en ce que** le dispositif de détection (29) est intégré dans le dispositif d'alerte (14).

3. Système d'alerte pour animaux sauvages selon l'une des revendications 1 à 2, **caractérisé en ce que** le dispositif d'alerte comprend une protection antivol mécanique.

4. Système d'alerte pour animaux sauvages selon la revendication 3, **caractérisé en ce que** la protection antivol mécanique comprend une ancre de terre (30) déployable.

5. Système d'alerte pour animaux sauvages selon l'une des revendications 1 à 4, **caractérisé en ce que** l'alimentation électrique (22) du dispositif d'alerte (14) comprend une batterie ou un accumulateur, en particulier un accumulateur lithium-polymère.

6. Système d'alerte pour animaux sauvages selon la revendication 5, **caractérisé en ce que** le dispositif d'alerte (14) comprend un module photovoltaïque (23) permettant de charger l'accumulateur.

7. Système d'alerte pour animaux sauvages selon la revendication 6, **caractérisé en ce que** le dispositif d'alerte (14) peut être configuré par le biais du module photovoltaïque (23).
